# FASCICULE DE BREVET EUROPEEN

(11) **EP 3 863 399 B1**
(45) Date de publication et mention de la délivrance du brevet: **20.03.2024**
(21) Numéro de dépôt: 19797772.1
(22) Date de dépôt: 08.10.2019
(51) Int. Cl.: A01K 13/00, A01K 27/00, A61D 7/00

(54) **DISPOSITIF AUTOMATISÉ POUR LA PULVÉRISATION CIBLÉE DE MATIÈRE ACTIVE**
AUTOMATISCHE VORRICHTUNG ZUM GEZIELTEN SPRÜHEN EINES AKTIVEN FLUIDS
AUTOMATED DEVICE FOR TARGETED SPRAYING OF ACTIVE FLUID

(30) Priorité: 08.10.2018 FR 1871142
(43) Date de publication de la demande: 18.08.2021
(73) Titulaire: AB7 Santé, 31450 Deyme (FR)
(72) Inventeur: CHELLE, René, 31450 Deyme (FR); VILBERT, Arnaud, 31450 Baziège (FR); NGUYEN, David, 31400 Toulouse (FR)
(86) Numéro de dépôt international: PCT/FR2019/000166
(87) Numéro de publication internationale: WO 2020/074796

(56) Documents cités:
- EP-A1- 0 340 278
- WO-A2-03/071982
- US-A- 4 627 385
- US-A1- 2017 006 826

## Description

La présente invention se situe dans le domaine de diffuseurs automatisés de produits actifs destinés à être portés par l'homme et/ou par un animal.

Classiquement, le traitement de l'infestation des animaux domestiques par des parasites externes et autres organismes vivants indésirables consiste en l'utilisation d'une ou plusieurs applications de produits antiparasitaires formulés sous différentes formes connues. Par exemple, les traitements curatifs par solution concentrée appelée « spot-on » consiste à déposer, sur la peau, une quantité d'actif dont la formulation est adaptée pour favoriser sa dissolution dans le sébum de l'animal qui assure la diffusion sur tout le corps. Le sébum, et dans une certaine mesure, les glandes sébacées, jouent également le rôle de réservoir assurant la rémanence du produit.

Il existe également des dispositifs dont la fonction est d'assurer une protection préventive contre les infestations. Les dispositifs les plus courants sont notamment les colliers antiparasitaires qui sont généralement constitués d'une matrice solide emmagasinant une certaine quantité d'actif antiparasitaire.

Mais aucun des produits précités ne fonctionne de manière automatisée. Dans ce domaine, on retrouve, dans le commerce, une variété de dispositifs « connectés » destinés à la diffusion d'actifs. Généralement, ces dispositifs comprennent notamment un corps, un réservoir contenant l'actif, un circuit imprimé et une source d'alimentation en électricité.

Par exemple, en ce qui concerne des diffuseurs qui conviennent pour un usage dans un espace clos comme un local ou une chambre, on peut citer notamment la demande de brevet US2002/19225 qui divulgue un diffuseur d'insecticide sous forme de gouttelettes comprenant un réservoir de liquide, une batterie, une résistance chauffante en contact avec une pluralité de mèches immergées fonctionnant par capillarité.

Le brevet EP1382399 divulgue un procédé anti-nuisibles utilisant un aérosol sous pression, dont l'ouverture/fermeture de la tête d'atomisation est commandée électroniquement, ce qui permet d'atomiser dans l'air, selon une quantité déterminée et par intermittence dans un intervalle de temps, des gouttelettes de principe actif à des dimensions inférieures à 20 µm. Bien qu'économique en termes de consommation d'énergie, l'appareil utilisé pour la mise en oeuvre de ce procédé ne convient que pour le traitement d'un espace clos

Le document WO95/19304 divulgue un dispositif brumisateur d'actifs anti-insectes par intermittence et en quantité déterminée. L'actif liquide est contenu dans un réservoir sous pression muni d'une électrovalve amovible dont l'ouverture est commandée par un circuit imprimé.

Le brevet FR2315229 divulgue un dispositif comprenant un nébuliseur électromécanique à ultrasons permettant d'atomiser, dans l'air, un liquide aqueux renfermant un insecticide qui peut aussi être en mélange avec des hydrocarbures halogénés.

Enfin, la demande internationale WO2009/059373 divulgue un système de nébulisation d'huiles essentielles, constitué d'une pluralité de distributeurs dont chacun comporte un réservoir amovible, une plaque piézoélectrique dont l'activation, en vue du déclenchement de la diffusion, est contrôlée par une unité centrale unique. Ladite unité est en mesure de communiquer aux distributeurs des informations telles que notamment la température ou la durée du cycle opératoire.

En ce qui concerne les diffuseurs portés par un animal, on peut citer notamment les brevets US4627385, US8714113, US5927233 et WO03/071982 qui décrivent des boitiers destinés à être fixés sur un collier pour dissuader un chien d'aboyer. Pour ce faire, le diffuseur est capable de délivrer, en réponse au bruit de l'aboiement, un choc électrique via des électrodes, ou bien des signaux sonores, ou encore un signal olfactif obtenu par la pulvérisation d'huile essentielle de citronnelle ou de toute autre substance, stockée dans un réservoir intégré dans le boitier. Le réservoir est pourvu d'une électrovanne dont l'ouverture est commandée électroniquement. Mais en aucun cas, ces brevets et notamment US4627385 ou WO03/071982 ne divulguent de dispositif avec un conduit tubulaire relié à un orifice d'éjection et ayant une longueur comprise entre 5 et 70cm.

Le brevet EP1551220 décrit également un dispositif similaire, à réservoir sous pression, capable de pulvériser de l'huile essentielle de citronnelle destinée à irriter un chien en vue de le dissuader d'aboyer.

Toujours dans le même domaine d'application, le brevet EP0340278 divulgue un boitier miniaturisé renfermant un réservoir sous pression muni d'une électrovalve dont l'ouverture est actionnée par le bruit de l'aboiement qui se transforme en signal électrique. En fonctionnement, chaque déclenchement de l'électrovalve provoque l'éjection du liquide contenu dans le réservoir, partiellement vaporisé, détendu, et donc froid, le liquide ainsi éjecté se met au contact de la peau du chien, provoquant une sensation de froid intense. Le brevet EP0340278 ne divulgue aucunement un conduit tubulaire relié à un orifice d'éjection et ayant une longueur comprise entre 5 et 70cm.

Néanmoins, les diffuseurs automatisés susmentionnés conviennent pour incommoder un chien afin de le dissuader d'aboyer puisque chaque éjection de liquide est caractérisée par un bruit fort. A titre d'exemple, le niveau de bruit de pulvérisation mesuré d'un dispositif connu sous la dénomination commerciale « HomePet » est supérieur à 30 Décibels.

Dans le domaine des diffuseurs d'actifs, il est connu des dispositifs pneumatiques où la pression lors de l'éjection émet un bruit caractéristique susceptible d'effrayer un animal. Ce bruit singulier est en partie dû à la différence de pression entre la sortie et l'intérieur du récipient pressurisé.

La demande de brevet US2017/0006826A1 divulgue un dispositif de localisation et d'administration de médicaments de manière topique sur des animaux. Ce dispositif consiste à disposer un appareil contenant un liquide de traitement sur le dos ou le garrot de l'animal à traiter/localiser, au moyen d'un harnais. L'administration du traitement se fait au moyen d'un diffuseur activable à distance par un opérateur, capable de traiter les zones cibles par intermittence et de manière dirigée. Cependant aucune mesure n'a été entreprise afin de diminuer ou pallier la problématique du bruit généré par le dispositif au sein de cette demande qui reste donc muette à ce sujet. Cette demande ne divulgue en aucun cas un moyen d'allier une réduction de bruit à une efficacité de pulvérisation sur des zones ciblées de l'animal. De plus, cette demande ne divulgue aucunement la présence d'une buse d'éjection à son orifice de sortie pour conduire à une efficacité de pulvérisation sur des zones ciblées.

En ce qui concerne le traitement antiparasitaire d'un animal, la production de bruits est inutile, voire indésirable en ce sens qu'ils doivent être maîtrisés de façon à ce que le port du dispositif ne soit pas une source de stress et que celui-ci soit facilement accepté par l'animal. Par ailleurs, comme ces diffuseurs peuvent être placés au voisinage du cou de l'animal, le nuage d'actif pulvérisé ne peut couvrir qu'une zone relativement restreinte située aux alentours de la buse de l'électrovanne.

Un objectif de la présente invention est de fournir un dispositif, dont l'intensité sonore est grandement réduite pour la diffusion d'actifs, à destination des zones d'intérêt du corps humain ou d'un animal. Préférentiellement, le dispositif est disposé au voisinage du cou d'un animal quadrupède, et est capable d'atteindre efficacement les zones du corps de prédilection des infestations, notamment le ventre, le poitrail, les pattes et les flancs. Par exemple, il est connu que les voies d'infestation des tiques sont les pattes, et plus généralement les parties inférieures d'un animal de compagnie.

Un autre objectif est de fournir un dispositif automatisé capable de diffuser de la matière active et permettant d'obtenir le meilleur compromis entre une efficacité de pulvérisation, un meilleur ciblage des zones à traiter et une réduction de l'intensité sonore émise lors du déclenchement de ladite pulvérisation.

Il est évident que la réalisation du dispositif selon l'invention tient compte des contraintes techniques liées à la miniaturisation, à la stabilité de l'actif dans le liquide ainsi que son efficacité sur les cibles, à la praticité tant pour l'animal que pour son maître. En effet, le port du dispositif ne doit pas gêner ni inciter l'animal à le retirer.

Par conséquent, la présente invention a pour objet un dispositif (1) comprenant un support de type collier, bracelet ou harnais et un boîtier (2) intégré audit ou fixé sur ledit support (3), ledit boitier (2) renfermant une solution liquide contenant au moins une matière active dans un réservoir (7), ladite solution étant éjectée au travers d'un orifice d'éjection (4), ledit réservoir (7) étant équipé d'un mécanisme de diffusion activable (10) qui communique avec un circuit électronique (10), alimenté par une batterie (11), dont l'activation déclenche une pulvérisation de ladite matière active, dans lequel l'orifice d'éjection (4) est connecté à un conduit tubulaire d'une longueur comprise entre 5 et 70 cm, pourvu d'au moins un orifice de sortie (5') et caractérisé en ce que le conduit tubulaire (5) présente un diamètre interne allant de 0,2 à 5 mm et une buse d'éjection de diamètre compris entre 0.2 mm et 2 mm à son orifice de sortie (5').

On entend par orifice d'éjection (4), l'orifice par lequel le contenu du réservoir, à savoir la matière active, est éjecté. L'orifice d'éjection peut être situé indifféremment sur la face inférieure ou supérieure du boitier.

Les mécanismes de diffusion activables, destinés à être intégrés dans le dispositif de diffusion de liquide, selon l'invention peuvent être :
- une électrovanne à buse qui comprend notamment un piston et une bobine électromagnétique qui constituent un ensemble communicant avec un réservoir, sous pression,
- un élément chauffant destiné à volatiliser un liquide, ledit élément étant agencé de manière à chauffer une mèche imbibée dudit liquide en provenance d'un réservoir,
- une mini-pompe pneumatique pour créer un effet Venturi, c'est-à-dire qu'elle est capable d'envoyer un débit d'air dans un conduit qui est perpendiculaire à un tube capillaire plongeant dans un liquide, l'extrémité du conduit à l'opposé de la pompe étant ouverte.

Selon l'invention, le mécanisme de diffusion activable est préférentiellement l'électrovanne. Selon un mode préféré, un circuit électronique commande l'actionnement du bobinage électromagnétique de l'électrovanne en vue du déclenchement de la pulvérisation.

Le dispositif comprend une buse de pulvérisation située à l'orifice de sortie.

On appelle buse de pulvérisation au sens de l'invention, un organe permettant d'obtenir une pulvérisation de la matière active.

Selon la présente invention, le mécanisme de diffusion activable est une électrovanne dont la buse de pulvérisation est déportée et est fixée à l'orifice de sortie (5'), à l'extrémité libre du conduit tubulaire.

La buse de pulvérisation a un diamètre compris entre 0.2mm et 2mm, préférentiellement entre 0.4mm et 1mm, et plus préférentiellement un diamètre égal à 0.6mm ou à 1 mm.

On assure l'étanchéité de la connexion entre la buse de l'électrovanne et le conduit tubulaire par des moyens biens connus de l'homme du métier, tels des pâtes d'étanchéité, des élastomères, des silicones.

On appelle conduit tubulaire, le tuyau par lequel transite le liquide à pulvériser selon l'invention.

Selon la présente invention, le conduit tubulaire peut être connecté à l'orifice d'éjection par emboîtement, par enfoncement, par encliquetage, par filetage ou tout autre moyen approprié.

Selon la présente invention, le conduit tubulaire est réalisé en polymère thermoplastique comme les polypropylènes, les polyéthylènes, les polychlorures de vinyle, les copolymères d'éthylène et d'acétate de vinyle, les polyamides, les polyuréthanes, ou encore en métal. Le conduit tubulaire peut être souple ou rigide. Dans une variante, le conduit tubulaire peut être en polymère souple et introduit dans un conduit tubulaire agissant en guide lui apportant rigidité, flexibilité et permettant de maintenir le conduit dans une forme appropriée à l'utilisation.

Le conduit tubulaire présente une longueur pouvant aller de 5 à 70 cm, et plus préférentiellement de 10 à 30 cm. Le conduit tubulaire selon l'invention présente un diamètre interne allant de 0,2 à 5 mm, préférentiellement de 0.8 à 4mm. La longueur du conduit tubulaire est à adapter selon le gabarit de l'animal porteur du dispositif et des zones à cibler avec la matière active pulvérisée.

Avantageusement, on peut prévoir que le conduit tubulaire ait une structure en accordéon sur au moins une partie de sa longueur, lui permettant de s'allonger et/ou de se raccourcir, voire de s'orienter. C'est cette même structure en accordéon qui permet la courbure du conduit tubulaire. De cette manière, le conduit tubulaire est ainsi ajustable et optimisé pour les différentes morphologies du sujet ou de l'animal.

Selon un mode de réalisation, on peut prévoir que le conduit tubulaire soit courbé à la sortie de l'orifice d'éjection de manière à orienter la direction du jet selon la morphologie de l'animal. Le conduit tubulaire, lorsqu'il est courbé, peut présenter un angle de courbure par rapport à l'embase compris entre 30° et 120°, préférentiellement entre 40° et 90°. A titre d'exemple, le conduit tubulaire ainsi courbé au voisinage du thorax de l'animal permet à celui-ci d'épouser sensiblement la forme à cet endroit. La courbure et la rigidité du matériau permettent de s'adapter au mieux à la morphologie de la cible et d'optimiser le traitement.

On appelle embase au sens de l'invention la partie de la buse qui vient supporter le conduit tubulaire.

Selon un mode de réalisation le conduit tubulaire peut être amovible. Cela a pour avantage de faciliter son remplacement par un autre dont la longueur et/ou la forme sera adaptée à l'objectif à atteindre.

De manière surprenante les meilleurs résultats combinant une réduction du bruit significative et une bonne pulvérisation ont été obtenus pour des dispositifs dont la longueur du conduit tubulaire varie entre 13 cm et 20 cm et comportant une buse de 1mm de diamètre interne, ladite buse étant alors située à l'orifice de sortie, situé au bout du conduit tubulaire.

De cette manière, l'intensité sonore générée par l'éjection du liquide par le conduit tubulaire est inférieure à 30 Décibels, préférentiellement inférieure à 25 Décibels.

Au sens de l'invention on entend par réduction significative du bruit, une réduction au moins équivalente à 30% par rapport au dispositif sans conduit tubulaire.

Selon un mode de réalisation, la matière active est choisie parmi un insecticide, un répulsif, un agent odoriférant, un agent cosmétique d'entretien des poils, un agent anti-démangeaison, un antidouleur, ou leurs mélanges.

Les insecticides et répulsifs de la présente invention sont connus de l'homme du métier, ils sont classiquement utilisés dans la lutte contre les organismes nuisibles précités. Par exemple, les insecticides et les répulsifs sont choisis notamment dans le groupe formé par des pyréthrinoïdes, des pyréthrines et leurs dérivés, des carbamates, des formamidines, des esters carboxyliques, le N,N-diéthyl-3-méthylbenzamide (DEET), des phénylpyrazoles, des composés organophosphorés, des composés organohalogénés, des néonicotinoïdes, des avermectines et leurs dérivés, des spinosynes, des huiles essentielles et leurs constituants (exemples : les terpènes et leurs dérivés (alcools, esters, aldéhydes), des sesquiterpènes et leurs dérivés (alcools, esters, aldéhydes)).

Au sens de l'invention, les organismes nuisibles ciblés sont constitués essentiellement par les ectoparasites tels que par exemple les puces, les tiques, les poux, les punaises. Néanmoins, d'autres organismes nuisibles peuvent également être ciblés à savoir des insectes volants comme les moustiques, les phlébotomes, les mouches ou encore des insectes rampants ainsi que des acariens.

L'agent odoriférant peut être d'origine naturelle ou de synthèse et, est choisi parmi les parfums, les huiles essentielles et leurs constituants et peut être utilisé pour limiter ou masquer les odeurs corporelles des animaux.

L'agent anti-démangeaison peut être une huile essentielle telle que le lavandin, l'huile essentielle de menthe poivrée, l'huile essentielle d'Eucalyptus citronné ou l'huile essentielle de thym, une huile végétale telle que l'huile d'argan, l'huile de canola ou l'huile végétale de bourrache, un alcool gras, un ester, un acide gras et ses esters tels que les omegas 3, 6 et 9, des vitamines telle que la vitamine PP, B3 ou leurs mélanges.

L'agent cosmétique d'entretien des poils peut être un corps gras comme des alcools, des esters, des huiles végétales, des glycérides, des acides gras essentiels tels que oméga 3, 6, 9, pour la brillance du poil ou des céramides, ou encore des vitamines B5, panthénol, extrait de racine de guimauve.

L'antidouleur peut être une huile essentielle ou composants des huiles essentielles, des alcools monoterpéniques, des aldéhydes monoterpéniques, des esters monoterpéniques ou leurs mélanges. A titre d'exemple non limitatif les anti-douleurs peuvent être l'huile essentielle de menthe poivrée, l'huile essentielle d'Eucalyptus citronnée, l'huile essentielle de gaulthérie, l'huile essentielle de romarin, le menthol, ou le méthyl salicylate.

Selon le but recherché, dans le cadre de l'invention, les matières actives susmentionnées peuvent être utilisées seules ou en association.

Le dispositif selon l'invention peut être fixé sur un support de type collier, bracelet ou harnais . Il sera entendu que le boitier est préférentiellement fixé sur un support, néanmoins, il peut également former un corps unique pour constituer un bracelet ou un collier par exemple.

Selon une autre variante de réalisation, le conduit tubulaire comporte au moins une ramification, la partie du conduit directement connectée à l'orifice d'éjection de liquide étant unique.

Selon une autre variante de réalisation, le conduit tubulaire peut comporter une pluralité de perforations, chaque perforation étant susceptible d'éjecter les particules fines de liquide renfermant la matière active. Les perforations ont une dimension moyenne de l'ordre de quelques centaines de micromètres à quelques millimètres. Les dimensions sont adaptées selon la nature chimique du solvant (gazeux, aqueux, hydro-alcoolique, huileux) et celle de la matière active. Il est fait en sorte que l'emplacement des perforations pratiquées sur le conduit tubulaire coïncide sensiblement aux zones d'infestation à protéger.

Selon une autre variante de réalisation, au moins une partie du support formé par un bracelet, un collier ou un harnais est constituée par le conduit tubulaire sur lequel sont pratiquées des perforations pour constituer les orifices de sortie. Dans un tels cas, l'extrémité libre du conduit tubulaire peut être bouchée. Avantageusement, grâce à ce mode de réalisation, on fait en sorte que les orifices de sortie soient situés sur les zones d'intérêt de manière à augmenter l'efficacité d'application du traitement.

De même, le dispositif selon l'invention, dont la structure est particulière, convient pour être fixé à un bracelet poignet porté par l'homme. Dans un tel cas, la matière active sera un répulsif d'insectes ou un insecticide.

De manière connue, les matières actives sont formulées dans un solvant approprié. Des exemples de solvants utilisables comprennent notamment des hydrocarbures aromatiques ou aliphatiques comme les huiles végétales, des hydrocarbures halogénés, des alcools aromatiques ou aliphatiques, des esters, des éthers et des cétones, de l'eau.

Des adjuvants de formulation, bien connus dans le domaine, tels que des stabilisants, des tensioactifs, des agents synergisants, des agents antimicrobiens par exemple peuvent également être ajoutés.

Il est entendu que le boitier du dispositif selon l'invention comporte un réservoir dans lequel se trouvera la matière active en solution formulée de manière connue de l'homme du métier.

Dans le cas d'une électrovanne à buse, le réservoir de liquide renfermant la matière active est sous pression, et la matière active est dispersée dans un solvant de type gaz propulseur. Dans le réservoir, le liquide représente 10 à 20% en poids par rapport au poids total.

De manière connue, on peut utiliser du gaz propulseur comme par exemple le gaz de pétrole liquéfié, des hydrocarbures halogénés, l'éther diméthylique, du gaz carbonique comprimé, de l'azote gazeux comprimé, des gaz fluorés comprimés comme le trans-1,3,3,3-tetrafluoroprop-1-ène. De même, il n'est pas exclu d'utiliser du gaz dépresseur de type alcane notamment le pentane. Dans un mode préférentiel, le gaz propulseur utilisé selon la présente invention est le trans-1,3,3,3-tetrafluoroprop-1-ène.

Selon un mode alternatif, le boitier comporte, en outre, un mécanisme de commande manuelle qui communique avec le circuit électronique pour activer le mécanisme de diffusion, ainsi qu'une valve destinée à recharger le réservoir en liquide. Le réservoir de liquide peut être démontable en vue de son remplacement.

Selon un autre mode avantageux, des capteurs et/ou des sondes appropriés sont intégrés au circuit électronique en vue de délivrer un signal électrique de durée déterminée et réglable, ce qui permet d'éjecter, en continue ou par intermittence, une quantité déterminée de liquide selon un intervalle de temps déterminé.

Le circuit électronique comporte des récepteurs appropriés, connus en soi, qui communiquent avec des appareils émetteurs adaptés pour le contrôle à distance de type télécommande, téléphone mobile et analogues permettant de commander à distance le mécanisme de diffusion. De manière connue, ces appareils équipés de tels récepteurs comportent également un programme de calcul adapté pour l'exécution de la commande du mécanisme de diffusion et, par conséquent, le déclenchement de la pulvérisation. Les moyens de contrôles à distance peuvent être choisis parmi un système radio, un système wifi ou une télécommande.

De manière connue, le circuit électronique est un dispositif de traitement conventionnel comprenant une minuterie interne, des registres de mémoire et des capacités mathématiques permettant de traiter un signal.

La présente invention a également pour objet une utilisation du dispositif pour la répulsion et/ou d'élimination d'un organisme nuisible, selon laquelle on pulvérise, en continu ou par intermittence, sur au moins une zone du corps d'une cible animale ou d'un sujet humain, un liquide renfermant au moins une matière active anti-nuisible en utilisant un dispositif destiné à être fixé à un support de type collier, harnais ou bracelet, comprenant un boitier destiné à loger un réservoir de liquide, renfermant au moins une matière active, susceptible d'être éjecté au travers d'un orifice d'éjection, ledit réservoir étant, en outre, équipé d'un mécanisme de diffusion activable susceptible d'être mis en communication avec un circuit électronique, alimenté par une batterie, susceptible de piloter ledit mécanisme de diffusion dont l'activation déclenche une pulvérisation, caractérisé en ce que l'orifice d'éjection est connecté à un conduit tubulaire pourvu d'au moins un orifice de sortie destiné à déporter l'éjection de ladite matière active en direction des zones d'intérêt à viser sur le corps notamment des zones d'infestation principales constituées par la partie inférieure, y compris le ventre, le poitrail ainsi que les pattes, de l'animal.

Il est entendu au sens de la présente demande que l'on adaptera mutatis mutandis la structure du dispositif, notamment le support et le conduit tubulaire en fonction de la cible, à savoir un sujet humain ou un animal.

Selon une mise en oeuvre du procédé, le volume de liquide pulvérisé est compris entre 10 et 400 µL dans un intervalle de temps de 2 à 10 secondes, la quantité de matière active représentant entre 0,01 et 50% en poids du liquide pulvérisé.

La présente invention concerne donc un dispositif et l'utilisation de celui-ci pouvant présenter les différentes caractéristiques suivantes.

La présente invention concerne donc un dispositif (1) comprenant un support de type collier, bracelet ou harnais et un boitier (2) intégré audit ou fixé sur ledit support (3), ledit boitier (2) renfermant une solution liquide contenant au moins une matière active dans un réservoir (7), ladite solution étant éjectée au travers d'un orifice d'éjection (4), ledit réservoir (7) étant équipé d'un mécanisme de diffusion activable (10) qui communique avec un circuit électronique (10), alimenté par une batterie (11), dont l'activation déclenche une pulvérisation de ladite matière active, caractérisé en ce que l'orifice d'éjection (4) est connecté à un conduit tubulaire d'une longueur comprise entre 5 et 70 cm pourvu d'au moins un orifice de sortie (5') et que le conduit tubulaire (5) présente un diamètre interne allant de 0,2 à 5 mm et une buse d'éjection de diamètre compris entre 0.2mm et 2mm à son orifice de sortie (5').

L'invention également le dispositif précédent, caractérisé en ce que le conduit tubulaire (5) présente un angle de courbure par rapport à l'embase compris entre 30° et 120°.

L'invention concerne le précédent dispositif, caractérisé en ce que le mécanisme de diffusion activable (10) est une électrovanne dont la buse de pulvérisation est déportée et est fixée à l'extrémité libre (5') du conduit tubulaire.

Le dispositif selon la présente invention est caractérisé en ce que l'intensité sonore générée par l'éjection du liquide par le conduit tubulaire (5) est inférieure à 30 Décibels.

Le dispositif selon la présente invention est caractérisé en ce que le circuit électronique (9) commande l'actionnement du bobinage électromagnétique de l'électrovanne en vue du déclenchement de la pulvérisation.

Le dispositif selon la présente invention est caractérisé en ce que le conduit tubulaire (5) a une structure en accordéon sur au moins une partie de sa longueur.

Le dispositif selon la présente invention est caractérisé en ce que le conduit tubulaire (5) comporte une pluralité de perforations.

Le dispositif selon la présente invention est caractérisé en ce que le conduit tubulaire (5) comporte au moins une ramification.

Selon la présente invention, le dispositif est caractérisé en ce que la matière active est choisie parmi un insecticide, un répulsif, un agent odoriférant, un agent cosmétique, un agent anti-démangeaison, ou leurs mélanges.

Selon la présente invention, le dispositif est caractérisé en ce que le circuit électronique (9) permet de commander à distance le mécanisme de diffusion (10). Ledit dispositif est caractérisé en ce que le contrôle à distance du mécanisme (10) s'effectue au moyen d'une télécommande, d'un système radio, ou d'un système wifi.

La présente invention concerne également l'utilisation du dispositif précédemment décrit pour améliorer la pulvérisation de matière active et diminuer le bruit généré par l'électrovanne.

La présente invention concerne également l'utilisation du dispositif pour la pulvérisation d'un agent répulsif ou d'un insecticide.

L'utilisation du dispositif selon la présente invention est caractérisée en ce que la matière active est pulvérisée en continue ou par intermittence sur la cible.

L'utilisation du dispositif permet que le volume de liquide pulvérisé soit compris entre 10 et 400 µL par jet dans un intervalle de temps de 2 à 10 secondes, la quantité de matière active représentant entre 0,01 et 50% en poids du liquide pulvérisé.

D'autres caractéristiques et avantages apparaitront à la lumière de la description des figures qui va suivre.
Figure 1 : vue en perspective de dessous d'un dispositif selon l'invention, fixé sur un collier.
Figure 2 : vue schématique simplifiée en coupe du dispositif selon l'axe ***I-I*** de la figure 1.
Figure 3 : vue schématique d'un chien portant le dispositif selon l'invention.
Figure 4 : mannequin chien sur lequel ont été réalisés des essais de pulvérisation.

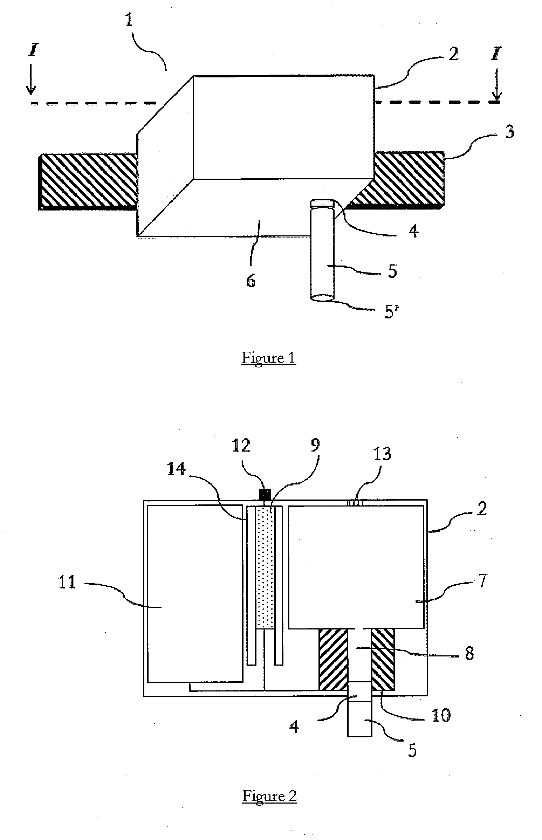

Sur la figure 1, on a représenté un dispositif (1) constitué d'un boitier (2) fixé sur un support (3) de type collier destiné à être porté par un animal. On peut voir sur la face inférieure (6) du boitier (2) que l'orifice d'éjection (4), qui est une buse de pulvérisation, est relié à un tube (5) en polypropylène. La buse (4) de l'électrovanne est connectée au tube (5), ouvert à l'une de ses extrémités (5'), dont la longueur est adaptée en fonction du gabarit de l'animal porteur. Dans le cas représenté, le tube (5) présente une longueur de 8 cm pour un diamètre interne de 2,5 mm.

Sur la figure 2, on peut voir que le boitier (2) loge un réservoir (7) de 4 mL, sous pression, contenant un liquide renfermant une matière active telle qu'un répulsif ; une électrovanne (10) à buse équipe ledit réservoir (7). La buse de pulvérisation (4) se trouve à l'extrémité libre de la partie mâle de l'embase (8). L'électrovanne (10) communique avec un circuit électronique (9), lui-même alimenté électriquement par une batterie (11), montée de façon interchangeable. On peut prévoir de fixer le circuit électronique (9) sur un support de fixation (14) approprié. Pour actionner manuellement la mise en route de l'électrovanne (10), on peut prévoir un bouton poussoir (12), relié au circuit électronique (9), sur la partie supérieure du boitier (2). On peut également prévoir une valve (13) de remplissage de liquide sur le boitier (2).

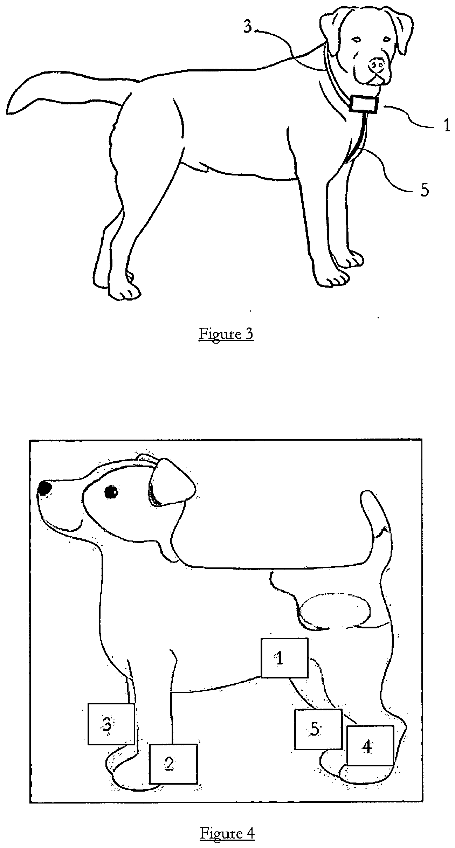

Sur la figure 3, on voit un chien qui porte un dispositif (1), selon l'invention, fixé sur son collier (3). Le tube (5) est coudé au niveau du poitrail du chien afin d'épouser au mieux la forme à cet endroit. De manière évidente, lorsque le chien est dans une posture assise, l'extrémité ouverte (5') du tube (5) atteint plus aisément la partie ventrale ainsi que les pattes.

Dans le cas où l'on fixe le dispositif selon l'invention sur un harnais, ce dernier peut être disposé autour de la hanche ou du thorax d'un animal.

Sur la figure 4, on a représenté cinq zones du corps du chien sur lesquelles ont été placées des bandes de papier Joseph afin d'évaluer la quantité de répulsif déposée sur chacune des zones.

On voit que la zone 1 correspond à l'abdomen, les zones 2 et 3 aux parties inférieures des deux pattes avant et les zones 4 et 5 aux parties inférieures des deux pattes arrière.

Pour comprendre l'invention ci-dessus décrite, les exemples suivants sont fournis à titre purement illustratif et non exhaustif.

Selon un mode de fonctionnement préférentiel du dispositif selon l'invention, le dispositif est équipé d'une électrovanne à buse, et fixé sur un collier porté par un chien.

Lorsqu'un animal porte le dispositif selon l'invention, fixé sur un support de type collier, chaque actionnement de l'électrovanne par le circuit électronique provoque l'éjection, par la buse, d'une quantité de liquide renfermant une certaine dose de matière active. Le conduit tubulaire a une longueur adaptée qui permet, à la matière active atomisée, d'atteindre les parties inférieures du corps d'un animal comme le ventre ou les pattes. Grâce à la programmation du circuit électronique, l'actionnement de l'électrovanne peut s'effectuer soit de manière automatique (par exemple 2 à 5 pulvérisations par jour), soit manuellement pour provoquer l'ouverture/fermeture de la buse. La programmation peut consister à déterminer la durée, la périodicité et la quantité de liquide pulvérisé. Lors de la programmation, on peut également choisir des valeurs de consigne au-delà desquelles on déclenche automatiquement l'actionnement de l'électrovanne. Par exemple, l'intervalle de temps entre deux pulvérisations successives peut varier de 2 secondes à 5 minutes. Chaque pulvérisation peut durer entre 0,5 seconde et 60 secondes. Le volume de liquide éjecté à chaque pulvérisation varie en fonction de la durée de la pulvérisation, et peut aller de 10 µl à 200 µl.

Le circuit électronique peut comporter des capteurs ou des sondes et des émetteurs. Comme capteurs, on peut prévoir un accéléromètre qui permet d'envoyer un signal d'alerte en cas de grattage excessif, ou inversement en cas d'immobilisation prolongée ce qui pourrait traduire un état amorphe symptomatique à la suite d'une infection virale par exemple.

Dans le cas où le circuit électronique comporte un émetteur qui communique avec un appareil de type télécommande ou téléphone portable, on peut déclencher à distance l'actionnement de l'électrovanne. Dans tous les cas, l'homme du métier spécialisé dans le domaine des circuits électroniques saura déterminer les paramètres et supports appropriés afin de configurer l'ensemble du circuit tel que décrit par le mémoire descriptif de la présente invention.

### Exemple 1 : Quantification de la distribution d'un liquide renfermant un répulsif sur les parties inférieures d'un chien.

Les essais de pulvérisation décrits aux points 1.1 à 1.3 suivants ont été réalisés sur un mannequin de chien adulte (Jack Russell), ci-après dénommé « mannequin », sur lequel ont été placées des bandes de papier Joseph (25 g/m²) à différents endroits du corps, ce qui représente une surface totale couverte de 289 cm², selon la distribution suivante :
- une bande de 15x9 cm sur le ventre (zone 1),
- une bande de 3,5x11 cm à l'intérieur de chacune des pattes (zones 2 à 5).

Après chaque pulvérisation, on laisse sécher le liquide pendant 5 mm, puis on pèse la quantité d'huile essentielle de lavandin déposée par centimètre carré de papier.

Le liquide est constitué d'une solution alcoolique renfermant 5% d'huile essentielle de lavandin et 90% d'éthanol absolu. On utilise le trans-1,3,3,3-tetrafluoroprop-1-ène comme gaz propulseur. On remplit le réservoir, sous pression, avec l'ensemble des composés ci-dessus, pour constituer le « liquide répulsif ».

Parallèlement aux essais de caractérisation gravimétrique du dépôt d'huile essentielle décrits ci-avant, l'intensité sonore générée par chacune des pulvérisations est mesurée via un sonomètre (Brüel & Kjær, modèle 2250-W).

### 1.1. Essais de pulvérisation au moyen d'un dispositif dépourvu de conduit tubulaire :

On dispose d'un dispositif pulvérisateur connu sous le nom commercial HomePet^{®} (modèle YD-4020). Il est constitué d'un boitier à l'intérieur duquel est logé un réservoir de liquide sous pression, équipé d'une électrovanne à buse. Le boitier est pourvu également d'une valve de remplissage de liquide. Le HomePet^{®} est commercialisé avec une télécommande ce qui permet de déclencher volontairement les pulvérisations. Ce dispositif est spécifiquement conçu pour dissuader un chien d'aboyer.

On remplit le réservoir du dispositif HomePet^{®} avec le « liquide répulsif », puis on fixe le boitier sur un collier disposé autour du cou du mannequin, la buse de pulvérisation étant dirigée vers le bas.

Une fois le dispositif mis en place, on déclenche les pulvérisations via la télécommande. Le volume de chaque jet est d'environ 70 µl. On réalise une série de 25 pulvérisations, puis on récupère les bandes de papier afin de les peser. L'expérience est répétée 3 fois. Les résultats sont consignés dans le tableau 1.

**[Tableau 1 : Mesure de la quantité d'huile essentielle de lavandin déposée sur le papier et intensité sonore moyenne générée par un jet]**

| N° essai | Quantité d'huile essentielle de lavandin déposée sur le papier (mg/cm²) | Intensité sonore moyenne générée par un jet (dB) |
|---|---|---|
| A | 0,015 | 32 à 34 |
| B | 0,017 | |
| C | 0,012 | |

### 1.2 Essais de pulvérisation au moyen de la première variante d'un dispositif selon l'invention :

On dispose d'un dispositif pulvérisateur identique au point 1.1. On relie, par emboîtement, l'embase de la buse avec un tube en polypropylène de 5 cm de longueur ayant un diamètre interne de 4 mm, le tube étant coudé en son milieu d'un angle d'environ 45°.

On remplit le réservoir du dispositif HomePet^{®} avec le « liquide répulsif », puis on procède comme au point 1.1. L'expérience est répétée 3 fois. Les résultats sont consignés dans le tableau 2.

**[Tableau 2 : Mesure de la quantité d'huile essentielle de lavandin déposée sur le papier et intensité sonore moyenne générée par un jet, au moyen du tube selon la première variante de l'invention]**

| N° essai | Quantité d'huile essentielle de lavandin déposée sur le papier (mg/cm²) | Intensité sonore moyenne générée par un jet (dB) |
|---|---|---|
| D | 0,046 | < 20 |
| E | 0,040 | |
| F | 0,042 | |

Par rapport aux résultats obtenus avec le dispositif de référence au point 1.1, on constate que, d'une part, la quantité d'huile essentielle de lavandin selon la première variante de l'invention a été augmentée de 2,84 fois par rapport à celle du dispositif HomePet^{®} et, d'autre part, l'intensité sonore a été réduite de sorte que sa valeur est inférieure à celle de la limite de détection du sonomètre.

### 1.3 Essais de pulvérisation au moyen de la seconde variante d'un dispositif selon l'invention :

On dispose d'un dispositif HomePet^{®} identique à celui décrit au point 1.2 à la différence que sa buse d'origine a été retirée de son embase. On relie donc directement l'embase de l'électrovanne, par emboîtement, à un tube en polypropylène ayant un diamètre interne de 0,8 mm pour une longueur de 8 cm. L'embase est en communication avec l'orifice du réservoir. Le tube est coudé à 90° aux deux tiers de sa longueur, soit sensiblement en dessous du thorax. La buse de pulvérisation ayant un diamètre de 0,5 mm est ensuite fixée à l'extrémité libre du tube.

On remplit le réservoir du dispositif HomePet^{®} avec le « liquide répulsif », puis on procède comme au point 1.1. L'expérience est répétée 3 fois. Les résultats sont consignés dans le Tableau 3.

**[Tableau 3 : Mesure de la quantité d'huile essentielle de lavandin déposée sur le papier et intensité sonore moyenne générée par un jet, au moyen du tube selon la première variante de l'invention]**

| N° essai | Quantité d'huile essentielle de lavandin déposée sur le papier (mg/cm²) | Intensité sonore moyenne générée par un jet (dB) |
|---|---|---|
| G | 0,160 | 20 à 22 |
| H | 0,220 | |
| I | 0,180 | |

On constate que, d'une part, la quantité d'huile essentielle de lavandin selon la seconde variante de l'invention a été augmentée de 12,4 fois par rapport à celle du dispositif HomePet^{®} au point 1.1 et, d'autre part, l'intensité sonore a été réduite de 35%.

Ces trois expériences montrent clairement que l'adjonction d'un conduit tubulaire, orientable selon la morphologie d'un animal, relié à une buse permet de cibler plus efficacement les parties basses d'un chien. Lorsque la buse est fixée à l'extrémité libre du tube, on augmente davantage la quantité d'huile essentielle de lavandin déposée sur les zones à traiter.

Par ailleurs, l'utilisation d'un tube permet d'atténuer significativement les intensités sonores générées par les jets contrairement aux dispositifs de l'art antérieur

### Exemple 2 : Essais visant à déterminer l'influence de la longueur de la trompe, de la présence ou non d'une buse déportée, et du diamètre interne de cette dernière sur le bruit émis à chaque pulvérisation.

On dispose d'un dispositif pulvérisateur fourni par la société Shenzen Trainertec Electronic Co., Ltd (modèle SP13 Remote Spray Trainer). Il est constitué d'un boitier à l'intérieur duquel est logé un réservoir de liquide sous pression, équipé d'une électrovanne à buse. Le boitier est pourvu également d'une valve de remplissage de liquide. Le SP13 Remote Spray Trainer est commercialisé avec une télécommande ce qui permet de déclencher volontairement les pulvérisations. La pulvérisation est réglable sur deux niveaux : Low (30-40 µL par pulvérisation) et High (70-80 µL par pulvérisation). Ce dispositif est spécifiquement conçu pour dissuader un chien d'aboyer. Ce dispositif est dénommé V0.

On remplit le réservoir du dispositif avec le « liquide répulsif », puis on fixe le boitier sur un collier disposé autour du cou du mannequin, la buse de pulvérisation étant dirigée vers le bas.

Le liquide est constitué d'une solution alcoolique renfermant 5% d'huile essentielle de lavandin et 90% d'éthanol absolu. On utilise le trans-1,3,3,3-tetrafluoroprop-1-ène comme gaz propulseur. On remplit le réservoir, sous pression, avec l'ensemble des composés ci-dessus, pour constituer le « liquide répulsif ».

Une fois le dispositif mis en place, on déclenche les pulvérisations via la télécommande (niveau High). L'intensité sonore générée par chacune des pulvérisations est mesurée via un sonomètre (Brüel & Kjær, modèle 2250-W) à une distance de 15 cm du collier. On réalise une série de 6 pulvérisations. Les résultats sont consignés dans le Tableau 4.

**Tableau 4 :**

| N° essai | Intensité sonore générée par un jet (dB) | Intensité sonore moyenne générée par un jet (Valeur/écart-type en dB) | Longueur du flexible emboîtée sur le Dispositif SP13 Remote Spray Train (mm) | Diamètre de la buse déportée en bout de trompe (mm) | Dispositifs |
|---|---|---|---|---|---|
| 1 | 40 | 41 (1) | Pas de flexible | Pas de buse | V1 |
| 2 | 42 | | | | |
| 3 | 41 | | | | |
| 4 | 42 | | | | |
| 5 | 40 | | | | |
| 6 | 40 | | | | |

On modifie le dispositif (modèle SP13 Remote Spray Trainer) en enlevant la buse d'origine de son embase et en reliant, par emboîtement, l'embase de la buse avec un tube en polypropylène de 13 cm de longueur ayant un diamètre interne de 1 mm (fourni par la société Weisser Berg). L'extrémité du flexible est laissé libre. Le tube est ensuite inséré au sein d'une gaine métallique de même longueur afin de pouvoir orienter le jet (diamètre interne 4 mm/externe 8 mm fourni par la société Dongguan Xinguanghong Metal & Plastic Products Co.,LTD). Ce dispositif est dénommé V2.

Ce dispositif est ensuite modifié comme suit : sur le dispositif V2 on fixe à l'extrémité du flexible une buse de pulvérisation de diamètre interne de 0,6 mm (dispositif V3) ou de 1 mm (dispositif V4).

Les réservoirs des dispositifs V2, V3 et V4 sont remplis de « liquide répulsif », puis on fixe les boitiers sur des colliers disposés autour du cou de mannequins, la buse de pulvérisation étant dirigée vers le bas.

Une fois les dispositifs mis en place, on déclenche les pulvérisations via la télécommande (position High). L'intensité sonore générée par chacune des pulvérisations est mesurée via un sonomètre (Brüel & Kjær, modèle 2250-W) à une distance de 15 cm des colliers. On réalise une série de 6 pulvérisations. Les résultats sont consignés dans le Tableau 5.

**Tableau 5 :**

| N° essai | Intensité sonore générée par un jet (dB) | Intensité sonore moyenne générée par un jet (Valeur/écart-type en dB) | Diamètre de la buse déportée en bout de trompe (mm) | Longueur du flexible emboité sur le Dispositif SP13 Remote Spray Train (mm) | Dispositifs |
|---|---|---|---|---|---|
| 7 | 15 | 17 (2) | Pas de buse | 130 | V2 |
| 8 | 15 | | | | |
| 9 | 17 | | | | |
| 10 | 17 | | | | |
| 11 | 19 | | | | |
| 12 | 19 | | | | |
| 13 | 31 | 33 (3) | 0,6 | 130 | V3 |
| 14 | 29 | | | | |
| 15 | 29,5 | | | | |
| 16 | 35 | | | | |
| 17 | 37 | | | | |
| 18 | 37 | | | | |
| 19 | 24 | 25 (2) | 1 | 130 | V4 |
| 20 | 24 | | | | |
| 21 | 23 | | | | |
| 22 | 27 | | | | |
| 23 | 27 | | | | |
| 24 | 26 | | | | |

On modifie le dispositif (modèle SP13 Remote Spray Trainer) en enlevant la buse d'origine de son embase et en reliant, par emboîtement, l'embase de la buse avec un tube en polypropylène de 20 cm de longueur ayant un diamètre interne de 1 mm (fourni par la société Weisser Berg). L'extrémité du flexible est laissé libre. Le tube est ensuite inséré au sein d'une gaine métallique de même longueur afin de pouvoir orienter le jet (diamètre interne/externe 4/8 mm fourni par la société Dongguan Xinguanghong Métal & Plastic Products Co.,LTD). Ce dispositif est dénommé V5.

Ce dispositif est ensuite modifié comme suit : sur le dispositif V5 on fixe à l'extrémité du flexible une buse de pulvérisation de diamètre interne de 0,6 mm (dispositif V6) ou de 1 mm (dispositif V7). Les réservoirs des dispositifs V5, V6 et V7 sont remplis de « liquide répulsif », puis on fixe les boitiers sur des colliers disposés autour du cou de mannequins, la trompe de pulvérisation étant dirigée vers le bas. Une fois les dispositifs mis en place, on déclenche les pulvérisations via la télécommande. L'intensité sonore générée par chacune des pulvérisations est mesurée via un sonomètre (Brüel & Kjær, modèle 2250-W) à environ 15 cm des colliers. On réalise une série de 6 pulvérisations. Les résultats sont consignés dans le Tableau 6.

**Tableau 6 :**

| **N° essai** | **Intensité sonore générée par un jet (dB)** | **Intensité sonore moyenne générée par un jet (Valeur/écart-type en dB)** | **Diamètre de la buse déportée en bout de trompe (mm)** | **Longueur du flexible emboité sur le Dispositif SP13 Remote Spray Train (mm)** | **Dispositifs** |
|---|---|---|---|---|---|
| 25 | 18 | 17 (1) | Pas de buse | 200 | V5 |
| 26 | 18 | | | | |
| 27 | 18 | | | | |
| 28 | 16 | | | | |
| 29 | 17 | | | | |
| 30 | 17 | | | | |
| 31 | 34 | 34 (3) | 0,6 | 200 | V6 |
| 32 | 31,5 | | | | |
| 33 | 31 | | | | |
| 34 | 35 | | | | |
| 35 | 33 | | | | |
| 36 | 41 | | | | |
| 37 | 22 | 24 (2) | 1 | 200 | V7 |
| 38 | 23 | | | | |
| 39 | 25,5 | | | | |
| 40 | 26 | | | | |
| 41 | 27 | | | | |
| 42 | 22 | | | | |

On dispose des dispositifs pulvérisateurs V1, V2, V5, V6 et V7 dont on remplit les réservoirs avec le « liquide répulsif ». On fixe les boitiers sur des colliers disposés autour du cou de mannequins, la trompe de pulvérisation étant dirigée vers le bas. Pour les dispositifs munis de trompe, on incline la gaine métallique flexible de manière à cibler la partie ventrale du mannequin sur laquelle est placée une bande de papier Joseph (25 g/m²) de 15x9 cm. Le tube est coudé à 90° aux deux tiers de sa longueur, soit sensiblement en dessous du thorax.

Une fois les dispositifs mis en place, on déclenche 25 pulvérisations (position High). On laisse sécher le liquide pendant 5 mm, puis on pèse la quantité d'huile essentielle de lavandin déposée par centimètre carré de papier. Chaque essai est répété six fois. Les résultats sont consignés dans le Tableau 7.

**Tableau 7 :**

| N° essai | Quantité d'huile essentielle de lavandin moyenne déposée par 25 sprays sur le papier (Valeur/ Ecart-type en mg/cm²) | Longueur du flexible emboîté sur le Dispositif SP13 Remote Spray Train (mm) | Diamètre de la buse déportée en bout de trompe (mm) | Dispositifs |
|---|---|---|---|---|
| 43 | 0.01 (0.01) | Pas de trompe | Pas de buse | V1 |
| 44 | 0.16 (0.11) | 130 | Pas de buse | V2 |
| 45 | 0.27 (0.11) | 200 | Pas de buse | V5 |
| 46 | 0.22 (0.06) | | 0,6 | V6 |
| 47 | 0.38 (0.10) | | 1 | V7 |

Les résultats donnés dans les tableaux 4,5 et 6 montrent que :
- L'adjonction d'une trompe mène à une atténuation significative du bruit ; les valeurs de bruit mesuré avec les dispositifs V2, V3, V4, V5, V6 et V7 sont inférieures à celles obtenues avec le dispositif V1 (non modifié)
- La longueur de la trompe n'influe pas significativement sur l'atténuation du bruit si on compare les tableaux 2 et 3.
- Une trompe démunie de buse de pulvérisation atténue mieux le bruit qu'une trompe modifiée avec une buse (0.6 ou 1 mm de diamètre interne).
- L'atténuation du bruit est moins efficace avec une buse de pulvérisation de faible diamètre (0,6 mm).

Les résultats donnés dans le tableau 7 montrent que :
- L'ajout d'une trompe permet d'obtenir dans tous les cas un ciblage efficace de l'actif sur la zone ciblée (ventre) : les quantités d'actif pesées avec les dispositifs V2, V3, V4, V5, V6 et V7 sont supérieures à celles obtenues avec le dispositif V1 (non modifié)
- Une trompe plus longue permet de récupérer plus d'actif sur la zone ciblée.
- Les meilleurs résultats sont obtenus avec une trompe longue et une buse de 1 mm de diamètre interne.

## Revendications

1. Dispositif (1) comprenant un support de type collier, bracelet ou harnais et un boitier (2) intégré audit ou fixé sur ledit support (3), ledit boitier (2) renfermant une solution liquide contenant au moins une matière active dans un réservoir (7), ladite solution étant éjectée au travers d'un orifice d'éjection (4), ledit réservoir (7) étant équipé d'un mécanisme de diffusion activable (10) qui communique avec un circuit électronique (10), alimenté par une batterie (11), dont l'activation déclenche une pulvérisation de ladite matière active dans lequel l'orifice d'éjection (4) est connecté à un conduit tubulaire d'une longueur comprise entre 5 et 70 cm pourvu d'au moins un orifice de sortie (5') et **caractérisé en ce que** le conduit tubulaire (5) présente un diamètre interne allant de 0,2 à 5 mm et une buse d'éjection de diamètre compris entre 0.2 mm et 2 mm à son orifice de sortie (5').

2. Dispositif selon la revendication 1, **caractérisé en ce que** le conduit tubulaire (5) présente un angle de courbure par rapport à l'embase compris entre 30° et 120°

3. Dispositif selon la revendication 2, **caractérisé en ce que** le mécanisme de diffusion activable (10) est une électrovanne dont la buse de pulvérisation est déportée et est fixée à l'extrémité libre (5') du conduit tubulaire.

4. Dispositif selon l'une des revendications 1 à 3, **caractérisé en ce que** le circuit électronique (9) commande l'actionnement du bobinage électromagnétique de l'électrovanne en vue du déclenchement de la pulvérisation.

5. Dispositif selon l'une des revendications précédentes, **caractérisé en ce que** le conduit tubulaire (5) comporte une pluralité de perforations.

6. Dispositif selon l'une des revendications précédentes, **caractérisé en ce que** le conduit tubulaire (5) comporte au moins une ramification.

7. Dispositif selon l'une des revendications précédentes, **caractérisé en ce que** la matière active est choisie parmi un insecticide, un répulsif, un agent odoriférant, un agent cosmétique, un agent anti-démangeaison, ou leurs mélanges.

8. Dispositif selon l'une des revendications précédentes, **caractérisé en ce que** le circuit électronique (9) permet de commander à distance le mécanisme de diffusion (10).

9. Utilisation d'un dispositif selon l'une des revendications précédentes pour améliorer la pulvérisation de matière active et diminuer le bruit généré par l'électrovanne.

10. Utilisation selon la revendication 9 pour la pulvérisation d'un agent répulsif ou d'un insecticide.

11. Utilisation selon l'une des revendication 9 ou 10, **caractérisée en ce que** le volume de liquide pulvérisé est compris entre 10 et 400 µL par jet dans un intervalle de temps de 2 à 10 secondes, la quantité de matière active représentant entre 0,01 et 50% en poids du liquide pulvérisé.

## Patentansprüche

1. Vorrichtung (1), umfassend einen Träger einer Halsband-, Armband- oder Geschirrart und ein Gehäuse (2), das in den Träger (3) integriert oder an diesem befestigt ist, wobei das Gehäuse (2) eine flüssige Lösung, die mindestens einen Wirkstoff beinhaltet, in einem Behälter (7) enthält, wobei die Lösung durch eine Ausstoßöffnung (4) ausgestoßen wird, wobei der Behälter (7) mit einem aktivierbaren Diffusionsmechanismus (10) ausgestattet ist, der mit einer elektronischen Schaltung (10) kommuniziert, die durch eine Batterie (11) gespeist wird, deren Aktivierung eine Zerstäubung des Wirkstoffs auslöst, wobei die Ausstoßöffnung (4) mit einer schlauchförmigen Leitung mit einer Länge zwischen 5 und 70 cm verbunden ist, die mit mindestens einem Auslass (5') versehen ist, und **dadurch gekennzeichnet, dass** die schlauchförmige Leitung (5) einen Innendurchmesser von 0,2 bis 5 mm und eine Ausstoßdüse mit einem Durchmesser zwischen 0,2 mm und 2 mm an seinem Auslass (5') aufweist.

2. Vorrichtung nach Anspruch 1, **dadurch gekennzeichnet, dass** die schlauchförmige Leitung (5) einen Krümmungswinkel relativ zu dem Unterteil zwischen 30° und 120° aufweist.

3. Vorrichtung nach Anspruch 2, **dadurch gekennzeichnet, dass** der aktivierbare Diffusionsmechanismus (10) ein Magnetventil ist, dessen Zerstäubungsdüse versetzt ist und an dem freien Ende (5') der schlauchförmigen Leitung befestigt ist.

4. Vorrichtung nach einem der Ansprüche 1 bis 3,
**dadurch gekennzeichnet, dass** die elektronische Schaltung (9) die Betätigung der elektromagnetischen Spule des Magnetventils im Hinblick auf die Auslösung der Zerstäubung steuert.

5. Vorrichtung nach einem der vorstehenden Ansprüche,
**dadurch gekennzeichnet, dass** die schlauchförmige Leitung (5) eine Vielzahl von Perforationen vorweist.

6. Vorrichtung nach einem der vorstehenden Ansprüche,
**dadurch gekennzeichnet, dass** die schlauchförmige Leitung (5) mindestens eine Verzweigung vorweist.

7. Vorrichtung nach einem der vorstehenden Ansprüche,
**dadurch gekennzeichnet, dass** der Wirkstoff aus einem Insektizid, einem Repellent, einem Duftstoff, einem kosmetischen Mittel, einem Mittel gegen Juckreiz oder deren Mischungen ausgewählt ist.

8. Vorrichtung nach einem der vorstehenden Ansprüche,
**dadurch gekennzeichnet, dass** die elektronische Schaltung (9) eine Fernsteuerung des Diffusionsmechanismus (10) ermöglicht.

9. Verwendung einer Vorrichtung nach einem der vorstehenden Ansprüche zum Verbessern der Zerstäubung des Wirkstoffs und Verringern des durch das Magnetventil erzeugten Geräuschs.

10. Verwendung nach Anspruch 9 zum Zerstäuben eines Abwehrmittels oder eines Insektizids.

11. Verwendung nach einem der Ansprüche 9 oder 10,
**dadurch gekennzeichnet, dass** das Volumen der zerstäubten Flüssigkeit zwischen 10 und 400 µL pro Strahl in einem Zeitintervall von 2 bis 10 Sekunden beträgt, wobei die Menge des Wirkstoffs zwischen 0,01 und 50 Gew.-% der zerstäubten Flüssigkeit ausmacht.

## Claims

1. Device (1) comprising a collar-type, harness-type or bracelet- type support and a case (2) integrated with or fixed to the said support (3), said case (2) containing a liquid solution containing at least one active material in a tank (7), said solution being ejected through an ejection orifice (4), said tank (7) being equipped with an activatable diffusion mechanism (10), which communicates with an electronic circuit (10), powered by a battery (11), the activation of which triggers spraying of said active material, wherein the ejection orifice (4) is connected to a tubular duct with a length of between 5 and 70 cm provided with at least one outlet orifice (5') and **characterized in that** the tubular duct (5) has an internal diameter ranging from 0. 2 to 5 mm and an ejection nozzle with a diameter of between 0.2 mm and 2 mm at its outlet orifice (5').

2. Device according to Claim 1 **characterized in that** the tubular duct (5) has an angle of curvature with respect to the baseplate of between 30° and 120°.

3. Device according to Claim 2, **characterized in that** the activatable diffusion mechanism (10) is a solenoid valve, the spray nozzle of which is offset and is fixed to the free end (5') of the tubular duct.

4. Device according to any one of Claims 1 to 3, **characterized in that** the electronic circuit (9) controls the actuation of the electromagnetic coil of the solenoid valve in order to trigger the spraying.

5. Device according to any one of the preceding claims, **characterized in that** the tubular duct (5) comprises a plurality of perforations.

6. Device according to any one of the preceding claims, **characterized in that** the tubular duct (5) comprises at least one branch.

7. Device according to any one of the preceding claims, **characterized in that** the active material is selected from an insecticide, a repellent, an odoriferous agent, a cosmetic agent, an anti-itch agent, or the mixtures thereof.

8. Device according to any one of the preceding claims, **characterized in that** the electronic circuit (9) allows the diffusion mechanism (10) to be remotely controlled.

9. Use of a device according to any one of the preceding claims for improving the spraying of active material and reducing the noise generated by the solenoid valve.

10. Use according to claim 9 for spraying a repellant or an insecticide.

11. Use according to any one of Claims 9 or 10, **characterized in that** the volume of sprayed liquid is comprise between 10 and 400 µL per jet over a time interval of 2 to 10 seconds, with the quantity of active material representing between 0.01 and 50% by weight of the sprayed liquid.
